# FASCICULE DE BREVET EUROPEEN

(11) **EP 4 168 654 B1**
(45) Date de publication et mention de la délivrance du brevet: **15.04.2026**
(21) Numéro de dépôt: 21737724.1
(22) Date de dépôt: 15.06.2021
(51) Int. Cl.: B29C 70/20, B29C 65/00, B29C 70/24, B29C 73/10, B29L 31/08, B29L 31/00, F01D 5/14, B29C 70/48, F01D 5/28, F04D 29/32, B29C 70/86, B29D 99/00

(54) **AUBE DE TURBOMACHINE À BORD D'ATTAQUE MÉTALLIQUE**
TURBOMASCHINENSCHAUFEL MIT METALLISCHER VORDERKANTE
TURBOMACHINE BLADE HAVING A METALLIC LEADING EDGE

(30) Priorité: 18.06.2020 FR 2006378; 25.06.2020 FR 2006676
(43) Date de publication de la demande: 26.04.2023
(73) Titulaire: SAFRAN AIRCRAFT ENGINES, 75015 Paris (FR)
(72) Inventeur: MORADI, Azalia, 77550 MOISSY-CRAMAYEL (FR); BEN BELGACEM, Bassem, 77550 MOISSY-CRAMAYEL (FR); IGLESIAS CANO, Célia, 77550 MOISSY-CRAMAYEL (FR)
(74) Mandataire: Cabinet Beau de Loménie
(86) Numéro de dépôt international: PCT/FR2021/051067
(87) Numéro de publication internationale: WO 2021/255378

(56) Documents cités:
- EP-A1- 2 037 082
- WO-A1-2019/186029
- FR-A1- 2 943 102
- FR-A1- 3 040 909
- US-A1- 2011 038 732

## Description

### Domaine Technique

La présente invention se rapporte au domaine général des aubes pour moteurs aéronautiques à turbine à gaz ou turbomachines aéronautiques en matériau composite et plus particulièrement aux aubes de turbomachine à bord d'attaque métallique.

### Technique antérieure

Afin de protéger l'aubage composite d'une aube de l'abrasion, l'érosion et/ou d'impacts avec un corps étranger, les aubes comprennent un bord d'attaque renforcé, et plus particulièrement un bord d'attaque monobloc en titane.

Ce bord d'attaque en titane est assemblé par collage sur l'aubage. Néanmoins, ce type de bord d'attaque induit des coûts importants de matière et de fabrication ainsi que des non-conformités sur tout son cycle de vie.

En effet, le coût de la matière titane est élevé, et la fabrication de l'aube entraîne de nombreuses étapes ainsi que des rebuts de matière. De plus, lors de l'assemblage du bord d'attaque en titane sur l'aubage, il faut préparer la surface de l'aubage avant de coller le bord d'attaque et celui-ci nécessite préalablement un passage en cycle autoclave long. Il faut également adapter la cavité de l'aubage recevant le bord d'attaque qui est bien souvent trop large ou trop étroite, ce qui entraîne des ondulations et/ou des stries au niveau des ailettes de l'aubage.

Lors de la fabrication de pièces intermédiaires pour la réalisation d'une aube comprenant un tel bord d'attaque, on peut également observer des non-conformités sur la pièce en entrée de montage alors que la pièce intermédiaire (bord d'attaque en titane) était conforme.

Il est également difficile de réparer un tel bord d'attaque endommagé sans changer l'ensemble du bord d'attaque.

Le document WO 2019/186029 décrit une aube de turbomachine comprenant un clinquant métallique sur le bord d'attaque de l'aube avec un adhésif entre le clinquant et l'aubage.

Le document FR 2 943 102 décrit une aube formée de plis unidirectionnels et comprenant un clinquant métallique sur le bord d'attaque.

Il est donc souhaitable de disposer d'une aube de turbomachine aéronautique moins coûteuse lors de sa fabrication et de sa maintenance et plus facilement réparable.

### Exposé de l'invention

L'invention concerne une aube de turbomachine comprenant un aubage en matériau composite à renfort fibreux densifié par une matrice, le renfort fibreux étant issu d'un tissage tridimensionnel de fibres, et un bord d'attaque métallique formé par un clinquant métallique, le clinquant ayant une ailette intrados et une ailette extrados qui s'étendant respectivement sur des faces intrados et extrados de l'aubage en épousant un profil aérodynamique de l'aube, caractérisée en ce que l'aube comprend également au moins un pli de tissu unidirectionnel en matériau composite sur le bord d'attaque entre l'aubage et le clinquant métallique, chaque pli de tissu s'étendant au moins partiellement sur les faces intrados et extrados de l'aubage.

Un tel bord d'attaque peut facilement être assemblé sur l'aubage et réparé sans toucher ni endommager la structure composite de l'aubage, car il suffit de remplacer le clinquant endommagé et/ou non-conforme par un autre clinquant qui ne sera en contact qu'avec les plis de tissu unidirectionnel. De plus, le bord d'attaque de l'invention permet de concevoir, produire et réparer à moindre coût l'aube. En effet, le clinquant métallique présente une épaisseur bien inférieure à celle d'un bord d'attaque monobloc en titane, les coûts de la matière sont donc réduits lors de la fabrication ou lors de la réparation de l'aube.

Il est également plus simple de s'adapter à des contraintes particulières de géométrie de l'aube avec ce type de bord d'attaque, comme le renforcement d'une des faces de l'aube en prolongeant le clinquant métallique sur la face intrados ou extrados de l'aubage sans pour autant modifier la structure interne de l'aubage.

Selon un mode de réalisation de l'invention, le clinquant métallique s'étend sur une première longueur sur la face intrados de l'aubage et sur une deuxième longueur sur la face extrados de l'aubage.

Cela permet de concevoir une aube dont le renfort métallique apporté par le clinquant s'étend sur une plus grande longueur sur la face intrados (ou extrados) par rapport à la face extrados (ou intrados) de l'aubage.

Selon un autre mode de réalisation de l'invention, les première et deuxième longueurs sont égales.

Cela permet d'obtenir un bord d'attaque symétrique par rapport à un axe reliant le bord d'attaque et le bord de fuite de l'aube.

Selon une caractéristique particulière de l'invention, chaque pli de tissu unidirectionnel s'étend sur toute une surface interne des ailettes intrados et extrados du clinquant.

Cela permet de ne pas avoir de contact direct entre le clinquant métallique et l'aubage. Ainsi le remplacement du clinquant métallique sera simplifié, car il ne touchera pas à la structure interne de l'aubage et il n'y aura pas besoin de préparer la surface de l'aubage avant la pose du nouveau clinquant.

Selon un mode de réalisation de l'invention, l'aube comprend une pluralité de plis de tissus unidirectionnels en matériau composite sur le bord d'attaque entre le clinquant métallique et l'aubage, les plis de la pluralité de plis de tissus étant drapés les uns sur les autres et s'étendant au moins partiellement sur les faces intrados et extrados de l'aubage.

Les plis de tissus unidirectionnels permettent de protéger la structure interne de l'aubage en cas d'endommagement du bord d'attaque et de remplacement du clinquant métallique. De plus, comme les plis sont drapés les uns sur les autres, on évite les phénomènes d'ondulation ou de stries pouvant intervenir entre les plis de la pluralité de plis lors de la fabrication, utilisation ou réparation de l'aube.

Selon une caractéristique particulière de l'invention, un film de colle est présent entre ledit au moins pli de tissu unidirectionnel et le clinquant métallique.

Selon une autre caractéristique particulière de l'invention, une fois le drapage des plis de tissus unidirectionnels réalisé, le clinquant métallique et le reste de l'aubage sont co-injectés.

Selon une autre caractéristique particulière de l'invention, un film de colle est présent entre ledit au moins un pli de tissu unidirectionnel et l'aubage.

Ces différentes caractéristiques (film de colle, co-injection et drapage) permettent de maintenir en place le clinquant métallique sur les plis de tissus unidirectionnels, et de maintenir en place les plis unidirectionnels sur l'aubage.

Selon une autre caractéristique particulière de l'invention, le matériau composite de chaque pli de tissu unidirectionnel comprend des fibres de Kevlar.

Selon une autre caractéristique particulière de l'invention, l'aubage est une pièce tridimensionnelle tissée avec des fibres de verre, le tissage pouvant être partiel ou total.

Selon une autre caractéristique particulière de l'invention, le clinquant métallique a une épaisseur comprise entre 0,1 mm et 0,5 mm sur les faces intrados et extrados.

Selon une autre caractéristique particulière de l'invention, ledit au moins un pli de tissu unidirectionnel a une épaisseur comprise entre 0,15 mm et 0,25 mm.

Selon une autre caractéristique particulière de l'invention, l'ensemble des plis de tissu unidirectionnel a une épaisseur comprise entre 0,2 mm et 1 mm.

Selon une autre caractéristique particulière de l'invention, l'aube constitue une aube directrice de sortie, une aube directrice d'entrée, une aube de soufflante ou une aube à calage variable.

Un autre objet de l'invention est un procédé de réparation d'une aube de turbomachine selon l'invention, comprenant le retrait du clinquant métallique, la préparation d'une surface d'un nouveau clinquant métallique et le placement dudit nouveau clinquant métallique sur le au moins un pli de tissu unidirectionnel.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.
[Fig. 1] La figure 1 représente, de manière schématique et partielle, une vue d'une aube selon un mode de réalisation de l'invention.
[Fig. 2] La figure 2 représente, de manière schématique et partielle, une vue en coupe transversale d'une aube selon un mode de réalisation de l'invention.
[Fig. 3] La figure 3 représente, de manière schématique et partielle, une vue en coupe transversale d'une aube selon un mode de réalisation de l'invention.
[Fig. 4] La figure 4 représente un ordinogramme montrant les différentes étapes d'un procédé de réparation d'une aube selon un mode de réalisation de l'invention.

### Description des modes de réalisation

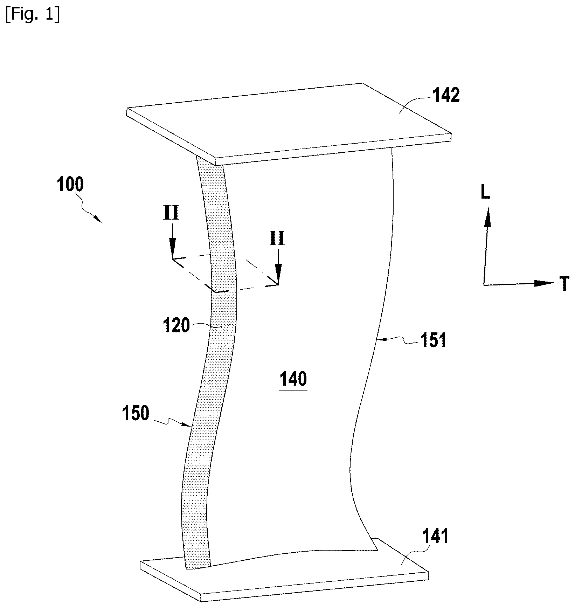

L'aube représentée sur les figures 1 à 3 peut par exemple être un aubage fixe ou un redresseur de flux.

La figure 1 représente, de manière schématique et partielle, une aube 100 selon l'invention. L'aube 100 comprend un aubage 140 qui s'étend selon une direction longitudinale L, correspondant à une direction radiale lorsque l'aube 100 est montée dans une turbomachine, entre une plateforme interne 141 et une plateforme externe 142. L'aubage 140 s'étend selon une direction transversale T entre un bord d'attaque 150 et un bord de fuite 151.

L'aubage 140 est réalisé en matériau composite tridimensionnel, et plus particulièrement en matériau composite à renfort fibreux densifié par une matrice. Le renfort fibreux peut comprendre des fibres de carbone, et la matrice peut être de type organique et obtenue à partir d'une résine de densification. En variante, le renfort fibreux peut comprendre des fibres de verre tissées.

Le bord d'attaque 150 de l'aubage 140 est recouvert par un clinquant métallique 120 placé sur l'aubage 140 en épousant un profil aérodynamique de l'aubage 140.

Au moins un pli de tissu unidirectionnel en matériau composite (non représenté sur la figure 1) est placé entre l'aubage 140 et le clinquant 120 sur le bord d'attaque 150.

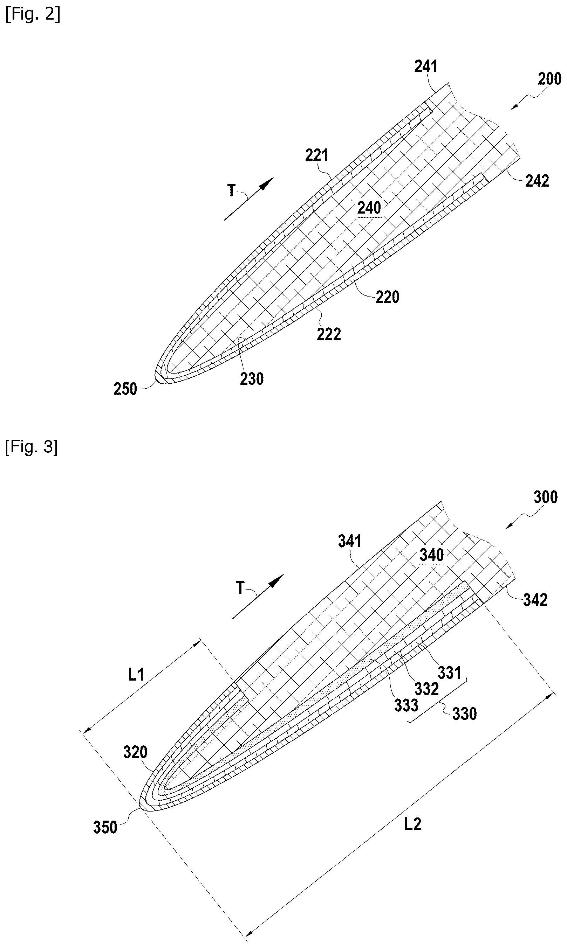

La figure 2 représente, de manière schématique et partielle, une vue en coupe transversale de l'aubage 240 d'une aube 200, selon le plan II de la figure 1, selon un mode de réalisation de l'invention.

Le clinquant métallique 220 comprend une ailette intrados 221 et une ailette extrados 222 qui s'étendent respectivement sur une partie de la face intrados 241 et une partie de la face extrados 242 de l'aubage 240. Les ailettes 221 et 222 sont intégrées à l'aubage 240 de sorte qu'elles épousent le profil aérodynamique de l'aube 200 en définissant une partie de ce profil aérodynamique.

Selon l'invention, l'aube 200 comprend également au moins un pli de tissu unidirectionnel en matériau composite 230 placé entre le clinquant métallique 220 et l'aubage 240. Sur l'exemple de la figure 2, un seul pli 230 est représenté. Ce pli de tissu 230 permet de ne pas avoir de contact direct entre le clinquant 220 et la structure fibreuse de l'aubage 240.

Dans l'exemple de la figure 2, le clinquant 220 et le pli de tissu 230 s'étendent sur une même longueur sur la face intrados 241 et sur la face extrados 242 de l'aubage 240. Le pli de tissu 230 s'étend donc sur toute la surface interne des ailettes intrados 221 et extrados 222 du clinquant 220. Le clinquant 220 est également symétrique par rapport à un axe s'étendant entre le bord d'attaque 250 et le bord de fuite de l'aube 200.

Le pli de tissu 230 a une épaisseur comprise entre 0,15 mm et 0,25 mm. Le clinquant métallique 220 a une épaisseur comprise entre 0,1 mm et 0,5 mm.

La figure 3 représente, de manière schématique et partielle, une vue en coupe de l'aubage 340 d'une aube 300 selon un autre mode de réalisation de l'invention.

Le clinquant métallique 320 comprend toujours une ailette intrados et une ailette extrados qui s'étendent respectivement sur une partie de la face intrados 341 et une partie de la face extrados 342 de l'aubage 340. Les ailettes et sont toujours intégrées à l'aubage 340 de manière à épouser le profil aérodynamique de l'aube 300.

Dans l'exemple représenté, l'aube 300 comprend une pluralité de plis de tissus unidirectionnels 330. En particulier, l'exemple de la figure 3 comprend trois plis 331, 332 et 333. Les plis 331, 332 et 333 sont drapés les uns sur les autres. Le drapage peut, par exemple, être réalisé à partir de plis unitaires unidirectionnels pré-imprégnés d'une résine époxy.

Dans cet exemple, le clinquant 320 s'étend sur une première longueur L1 sur la face intrados 341 de l'aubage 340 et sur une deuxième longueur L2 sur la face extrados 342 de l'aubage 340. Le clinquant 320 est donc asymétrique par rapport à l'axe s'étendant entre le bord d'attaque 350 et le bord de fuite de l'aube 300. Dans cet exemple, les plis 331, 332, 333 s'étendent sur les mêmes longueurs L1 et L2 sur les faces intrados 341 et extrados 342 de l'aubage 300. Mais ils peuvent également s'étendre sur des longueurs supérieures à L1 pour la face intrados 341 et supérieures à L2 pour la face extrados 342 de l'aubage 340, ce qui permet de protéger l'aubage 340 lors de l'assemblage et/ou le retrait du clinquant 320 lors de la fabrication ou la réparation de l'aube 300. Les longueurs L1 et L2 peuvent également varier sur la hauteur de l'aube 300 et s'inverser en termes de proportions, c'est-à-dire que L1 peut être plus importante que L2 et inversement.

La pluralité de plis 330 a par exemple une épaisseur comprise entre 0,2 mm et 1 mm, et le clinquant métallique 320 entre 0,1 mm et 0,5 mm.

Quel que soit le mode de réalisation, afin de fixer le clinquant sur l'aubage, un film de colle peut également être présent entre le clinquant métallique et les plis de tissus unidirectionnels.

Quel que soit le mode de réalisation, afin de fixer le clinquant sur l'aubage, on peut faire une co-cuisson du clinquant métallique avec l'aubage comprenant l'aubage et les plis de tissus unidirectionnels après drapage des plis de tissus.

Quel que soit le mode de réalisation, afin de fixer les plis de tissus sur l'aubage, on peut draper les plis entre eux qui sont pré-imprégnés d'une résine. Lors de la cuisson, la résine des plis pré-imprégnés va polymériser et durcir.

Quel que soit le mode de réalisation de l'invention, le matériau formant le clinquant métallique peut comprendre un alliage du titane et/ou de l'aluminium.

Quel que soit le mode de réalisation de l'invention, le matériau composite des plis de tissu unidirectionnel comprend des fibres de Kevlar. L'intérêt du Kevlar est de présenter une forte résistance à l'impact, ce qui permet de protéger l'aube, par exemple en cas d'impact avec des oiseaux.

Quel que soit le mode de réalisation de l'invention, l'aubage peut être une pièce tridimensionnelle pouvant être issue d'un tissage tridimensionnel de fibres. Elle peut par exemple être tissée à partir de fibres organiques, telles que des fibres de carbone, ou de fibres de verre. Les fibres sont ensuite densifiées par une matrice pouvant être de type organique.

Quel que soit le mode de réalisation, l'aube peut constituer une aube directrice de sortie, une aube directrice d'entrée, une aube de soufflante ou une aube à calage variable. Et plus particulièrement, l'aube peut constituer toute aube de soufflante au niveau du compresseur basse pression d'une turbomachine.

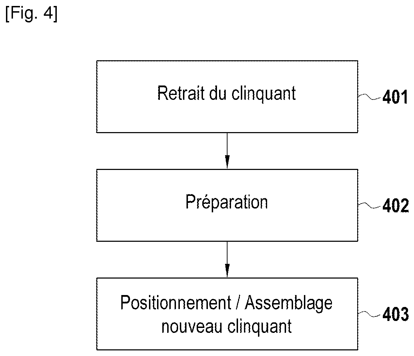

L'invention concerne également un procédé de réparation d'une aube selon l'invention. La figure 4 montre les différentes étapes d'un exemple de procédé de réparation selon l'invention.

La première étape 401 du procédé consiste à retirer le clinquant métallique de l'aube. Ce clinquant peut, par exemple, être endommagé suite à l'utilisation de l'aube. Pour retirer le clinquant, on peut par exemple le peler.

Dans une seconde étape 402, on prépare la surface du nouveau clinquant métallique.

Dans une troisième étape 403, un nouveau clinquant est positionné et assemblé sur le bord d'attaque de l'aube. Le nouveau clinquant peut être assemblé sur les plis de tissus unidirectionnels par collage, ou par co-cuisson du nouveau clinquant, des plis de tissus et de l'aubage. La co-cuisson est par exemple réalisée dans un autoclave afin que la résine polymérise dans toute la pièce.

L'expression « compris(e) entre ... et ... » doit se comprendre comme incluant les bornes.

## Revendications

1. Aube (100, 200, 300) de turbomachine comprenant un aubage (140, 240, 340) en matériau composite à renfort fibreux densifié par une matrice, le renfort fibreux étant issu d'un tissage tridimensionnel de fibres, et un bord d'attaque (150, 250, 350) métallique formé par un clinquant métallique (120, 220, 320), le clinquant ayant une ailette intrados (221) et une ailette extrados (222) qui s'étendent respectivement sur des faces intrados (241, 341) et extrados (242, 342) de l'aubage en épousant un profil aérodynamique de l'aube, **caractérisée en ce que** l'aube comprend également au moins un pli de tissu unidirectionnel (230, 331, 332, 333) en matériau composite sur le bord d'attaque entre l'aubage et le clinquant métallique, chaque pli de tissu s'étendant au moins partiellement sur les faces intrados et extrados de l'aubage.

2. Aube de turbomachine selon la revendication 1, dans laquelle le clinquant métallique s'étend sur une première longueur (L1) sur la face intrados de l'aubage et sur une deuxième longueur (L2) sur la face extrados de l'aubage.

3. Aube de turbomachine selon la revendication 2, dans laquelle les première et deuxième longueurs sont égales.

4. Aube de turbomachine selon l'une quelconque des revendications 1 à 3, dans laquelle chaque pli de tissu unidirectionnel s'étend sur toute une surface interne des ailettes intrados et extrados du clinquant.

5. Aube (300) de turbomachine selon l'une quelconque des revendications 1 à 4, dans laquelle l'aube comprend une pluralité (330) de plis de tissus unidirectionnels (331, 332, 333) en matériau composite sur le bord d'attaque entre le clinquant métallique et l'aubage, les plis de la pluralité de plis de tissus étant drapés les uns sur les autres et s'étendant sur les faces intrados (341) et extrados (342) de l'aubage (340) en épousant le profil aérodynamique de l'aube.

6. Aube de turbomachine selon l'une quelconque des revendications 1 à 5, dans laquelle un film de colle est présent entre ledit au moins un pli de tissu unidirectionnel et le clinquant métallique.

7. Aube de turbomachine selon l'une quelconque des revendications 1 à 6, dans laquelle le clinquant métallique a une épaisseur comprise entre 0,1 mm et 0,5 mm sur les faces intrados et extrados.

8. Aube de turbomachine selon l'une quelconque des revendications 1 à 7, dans laquelle ledit au moins un pli de tissu unidirectionnel a une épaisseur comprise entre 0,15 mm et 0,25 mm.

9. Aube de turbomachine selon l'une quelconque des revendications 1 à 8, constituant une aube directrice de sortie, une aube directrice d'entrée, une aube de soufflante ou une aube à calage variable.

10. Procédé de réparation d'une aube de turbomachine selon l'une quelconque des revendications 1 à 9, comprenant le retrait du clinquant métallique (401), la préparation d'une surface d'un nouveau clinquant métallique (402) et le placement dudit nouveau clinquant métallique sur le au moins un pli de tissu unidirectionnel (403).

## Patentansprüche

1. Schaufel (100, 200, 300) für eine Turbomaschine, die eine Beschaufelung (140, 240, 340) aus Verbundmaterial mit einer durch eine Matrix verdichteten Faserverstärkung, wobei die Faserverstärkung aus einer dreidimensionalen Verwebung von Fasern stammt, und eine metallische Vorderkante (150, 250, 350) umfasst, die durch eine metallische Verkleidung (120, 220, 320) gebildet ist, wobei die Verkleidung einen druckseitigen Flügel (221) und einen saugseitigen Flügel (222) aufweist, die sich jeweils auf den druckseitigen (241, 341) und saugseitigen Flächen (242, 342) der Beschaufelung erstrecken, wobei sie sich einem aerodynamischen Profil der Schaufel anpassen, **dadurch gekennzeichnet, dass** die Schaufel auch zumindest eine unidirektionale Gewebelage (230, 331, 332, 333) aus Verbundmaterial auf der Vorderkante zwischen der Beschaufelung und der metallischen Verkleidung umfasst, wobei jede Gewebelage sich zumindest zum Teil auf den druckseitigen und saugseitigen Flächen der Beschaufelung erstreckt.

2. Turbomaschinenschaufel nach Anspruch 1, wobei die metallische Verkleidung sich über eine erste Länge (L1) auf der druckseitigen Fläche der Beschaufelung und über eine zweite Länge (L2) auf der saugseitigen Fläche der Beschaufelung erstreckt.

3. Turbomaschinenschaufel nach Anspruch 2, wobei die erste und die zweite Länge gleich sind.

4. Turbomaschinenschaufel nach einem der Ansprüche 1 bis 3, wobei jede unidirektionale Gewebelage sich über eine gesamte innere Oberfläche der druckseitigen und saugseitigen Flügel der Verkleidung erstreckt.

5. Turbomaschinenschaufel (300) nach einem der Ansprüche 1 bis 4, wobei die Schaufel mehrere (330) unidirektionale Gewebelagen (331, 332, 333) aus Verbundmaterial auf der Vorderkante zwischen der metallischen Verkleidung und der Beschaufelung umfasst, wobei die Gewebelagen der mehreren Gewebelagen aufeinander drapiert sind und sich auf den druckseitigen (341) und saugseitigen Flächen (342) der Beschaufelung (340) erstrecken, wobei sie sich dem aerodynamischen Profil der Schaufel anpassen.

6. Turbomaschinenschaufel nach einem der Ansprüche 1 bis 5, wobei ein Klebstofffilm zwischen der zumindest einen unidirektionalen Gewebelage und der metallischen Verkleidung vorhanden ist.

7. Turbomaschinenschaufel nach einem der Ansprüche 1 bis 6, wobei die metallische Verkleidung auf den druckseitigen und saugseitigen Flächen eine Dicke zwischen 0,1 mm und 0,5 mm aufweist.

8. Turbomaschinenschaufel nach einem der Ansprüche 1 bis 7, wobei die zumindest eine unidirektionale Gewebelage eine Dicke zwischen 0,15 mm und 0,25 mm aufweist.

9. Turbomaschinenschaufel nach einem der Ansprüche 1 bis 8, die eine Austritts-Leitschaufel, eine Eintritts-Leitschaufel, eine Gebläseschaufel oder eine Schaufel mit variablem Anstellwinkel bildet.

10. Verfahren zur Reparatur einer Turbomaschinenschaufel nach einem der Ansprüche 1 bis 9, umfassend das Abnehmen der metallischen Verkleidung (401), die Vorbereitung einer Oberfläche einer neuen metallischen Verkleidung (402) und die Platzierung der neuen metallischen Verkleidung auf der zumindest einen unidirektionalen Gewebelage (403).

## Claims

1. A turbomachine blade (100, 200, 300) comprising a blading (140, 240, 340) made of composite material with a fibrous reinforcement densified by a matrix, the fibrous reinforcement being derived from a three-dimensional fiber weaving, and a metal leading edge (150, 250, 350) formed by a metal foil (120, 220, 320), the foil having an intrados fin (221) and an extrados fin (222) which extend respectively over intrados (241, 341) and extrados (242, 342) faces of the blading by conforming to an airfoil of the blade, **characterized in that** the blade also comprises at least one unidirectional fabric ply (230, 331, 332, 333) made of composite material on the leading edge between the blading and the metal foil, each fabric ply extending at least partially over the intrados and extrados faces of the blading.

2. The turbomachine blade according to claim 1, wherein the metal foil extends over a first length (L1) on the intrados face of the blading and over a second length (L2) on the extrados face of the blading.

3. The turbomachine blade according to claim 2, wherein the first and second lengths are equal.

4. The turbomachine blade according to any one of claims 1 to 3, wherein each unidirectional fabric ply extends over an entire inner surface of the intrados and extrados fins of the foil.

5. The turbomachine blade (300) according to any one of claims 1 to 4, wherein the blade comprises a plurality (330) of unidirectional fabric plies (331, 332, 333) made of composite material on the leading edge between the metal foil and the blading, the plies of the plurality of fabric plies being draped over each other and extending over the intrados (341) and extrados (342) faces of the blading (340) by conforming to the airfoil of the blade.

6. The turbomachine blade according to any one of claims 1 to 5, wherein an adhesive film is present between said at least one unidirectional fabric ply and the metal foil.

7. The turbomachine blade according to any one of claims 1 to 6, wherein the metal foil has a thickness comprised between 0.1 mm and 0.5 mm on the intrados and extrados faces.

8. The turbomachine blade according to any one of claims 1 to 7, wherein said at least one unidirectional fabric ply has a thickness comprised between 0.15 mm and 0.25 mm.

9. The turbomachine blade according to any one of claims 1 to 8, constituting an outlet guide vane, an inlet guide vane, a fan blade or a variable-pitch blade.

10. A method for repairing a turbomachine blade according to any one of claims 1 to 9, comprising the removal of the metal foil (401), the preparation of a surface of new metal foil (402) and the positioning of said new metal foil on the at least one unidirectional fabric ply (403).
